# EUROPÄISCHE PATENTSCHRIFT

(11) **EP 1 042 332 B1**
(45) Veröffentlichungstag und Bekanntmachung des Hinweises auf die Patenterteilung: **24.09.2003**
(21) Anmeldenummer: 98966289.5
(22) Anmeldetag: 10.12.1998
(51) Int. Cl.: C07F 3/02, C07F 7/08

(54) **HERSTELLUNG VON ORGANOMAGNESIUM-VERBINDUNGEN UNTER EINSATZ VON KATALYSATOREN**
PRODUCTION OF ORGANOMAGNESIUM COMPOUNDS USING CATALYSTS
PRODUCTION DE COMPOSES ORGANOMAGNESIENS A L'AIDE DE CATALYSEURS

(30) Priorität: 23.12.1997 DE 19757499
(43) Veröffentlichungstag der Anmeldung: 11.10.2000
(73) Patentinhaber: Studiengesellschaft Kohle mbH, 45470 Mülheim (DE)
(72) Erfinder: BOGDANOVIC, Borislav, D-45470 Mülheim an der Ruler (DE); SCHWICKARDI, Manfred, D-45470 Mülheim an der Ruler (DE)
(74) Vertreter: von Kreisler, Alek, Dipl.-Chem.
(86) Internationale Anmeldenummer: EP9808056
(87) Internationale Veröffentlichungsnummer: WO99033844

(56) Entgegenhaltungen:
- WO-A-98/02443
- DE-A- 2 755 300
- DE-A- 19 628 159

## Beschreibung

Die vorliegende Erfindung betrifft ein Verfahren zur Herstellung von Organomagnesium-Verbindungen aus Organo-Halogeniden und Magnesiummetall in Gegenwart von Katalysatoren.

Grignard-Verbindungen werden üblicherweise durch Umsetzung von organischen Halogeniden mit Magnesium in einem etherischen Lösungsmittel dargestellt; in gewissen Fällen ist ihre Darstellung auch in Kohlenwasserstoffen möglich (Comprehensive Organometallic Chemistry II, Vol. 1, 1995, p. 58-63; Comprehensive Organometallic Chemistry I, Vol. 1, 1982, p. 155; *Chem. Ber.* **1990**, 123, 1507 und 1517; Houben-Weyl, Methoden der organischen Chemie, **1973**, 13/2a, 53-192.)

Es existiert jedoch eine Vielzahl von organischen Halogen-Verbindungen - dazu gehören insbesondere aromatische und vinylische Chlorverbindungen - mit denen die Grignard-Reaktion nur zögernd, mit geringen Ausbeuten, schlecht oder gar nicht gelingt. Zur Erhöhung der Reaktivität von Magnesium gegenüber solchen Halogeniden sind zahlreiche Methoden bekannt, die auf physikalischer (Zermahlen, Anwendung von Ultraschall, Metallverdampfung) oder chemischer Aktivierung des Magnesiums (Mitführungsmethode, Rieke-Methode, Dehydrierung von Magnesiumhydrid, reversible Bildung von Magnesiumanthracen) beruhen (Active Metals - Preparation, Characterization, Applications, Herausg. A. Fürstner, VCH, 1996).

Weiterhin ist ein Verfahren bekannt, das auf physikalischer und chemischer Aktivierung des Magnesiums bei Grignard-Reaktionen beruht (DE 27 55 300 A1). Das für die Grignard-Reaktion eingesetzte Magnesium-Metall wird vor seiner Verwendung durch Vermahlen in einem inerten Lösungsmittel unter Schutzgas in Gegenwart von metallorganischen Aluminium-, Bor- oder Zinkverbindungen voraktiviert.

Als Katalysatoren für die Grignard-Reaktion sind bekannt Anthracen bzw. Magnesiumanthracen und ihre Derivate; sie sind allerdings nur im Falle der Allyl-, Propargyl- und Benzylhalogenide anwendbar (*Chem. Ber.* **1990**, *123,* 1507). Die Nachteile der genannten Methoden sind, daß sie entweder relativ aufwendig und kostspielig oder nur beschränkt anwendbar bzw. wirksam sind, oder zu erhöhtem Verbrauch von Magnesium (die Mitführungsmethode: *J*. *Org. Chem.* **1959**, *24*, 504) führen. Es besteht daher nach wie vor der Bedarf nach wirksamen und wirtschaftlichen Methoden zur Herstellung von Grignard-Verbindungen ausgehend von oben genannten reaktionsträgen organischen Halogenverbindungen, die nicht mit den erwähnten Nachteilen behaftet sind, und unter der Vorgabe, daß herkömmliche, kommerzielle Magnesiumsorten verwendet werden können.

Es wurde nun überraschenderweise gefunden, daß durch den Zusatz von geeigneten Metallverbindungen, ggf. in Kombination mit Kokatalysatoren, die Umwandlung von organischen Halogenverbindungen, insbesondere von aromatischen Chlorverbindungen und chlorhaltigen Heterocyclen, sowie anderen wenig reaktiven organischen Chlorverbindungen in die entsprechenden Grignard-Verbindungen unter Einsatz von Magnesiummetall, z. B. in Form von kommerziell erhältlichen Mg-Pulvern oder -Spänen, in z. T. sehr hohen Ausbeuten gelingt. Als katalytisch aktiv gelten derartige Systeme auf Basis der Verbindungen der Übergangsmetalle Mn, Fe, Co oder Cu. in denen an das Metall Elemente der Gruppen 15 oder 16 des Periodensystems, bevorzugt N bzw. 0, gebunden sind. Besonders wirksam sind Katalysatoren, die Mn, Fe, Co oder Cu mit Alkoxy-, Aryloxy-, Amido- oder Phthalocyano-Gruppen enthalten. Als Kokatalysatoren gelten insbesondere Magnesiumhalogenide sowie Anthracene oder substituierte Anthracene und deren Mg-Addukte. Das Verfahren wird bevorzugt in etherischen Lösungsmitteln, z. B.THF, Diglyme und Monoglyme, durchgeführt. Die Umsetzungen mit Organochlorverbindungen werden bevorzugt bei Raumtemperatur bis zur Siedetemperatur des Lösungsmittels durchgeführt.

Die Erfindung wird anhand der folgenden Beispiele näher erläutert, ohne dadurch eingeschränkt zu werden. Die nachfolgend beschriebenen Versuche wurden in Argonatmosphäre durchgeführt. Es wurden luft- und wasserfreie Lösungsmittel verwendet. THF wird zweckmäßigerweise über Magnesiumanthracen·3 THF getrocknet. In allen Versuchen wurde kommerzielles Mg-Pulver (270 mesh) verwendet. Wasserfreies MgCl₂ wurde für diesen Zweck aus 1,2-Dichlorethan und Magnesiumpulver in THF hergestellt.

### Beispiel 1:

### Herstellung der Grignard-Verbindung aus 1,3-Dibenzyl-2-(4-chlorphenyl)-imidazolidin mit Fe(OEt)₂ und Isolierung als TMS-Produkt

1,25 g (51,4 mmol) Magnesium-Pulver (270 mesh) wurden mit 8 ml THF und 4 Tropfen Ethylbromid versetzt und der Ansatz 1,5 h bei Raumtemperatur gerührt. Anschließend wurden 120 mg (0,82 mmol) Eisen(II)-ethanolat zugegeben und 30 min bei Raumtemperatur gerührt, wobei die Lösung eine dunkelbraune Farbe annahm. Der Ansatz wurde mit einem Ölbad auf 45°C erwärmt und bei dieser Temperatur tropfenweise innerhalb 1 h mit 12,0 g (33,1 mmol) 1,3-Dibenzyl-2-(4-chlorphenyl)-imidazolidin in 23 ml THF unter intensivem Rühren versetzt. Der Ansatz wurde weitere 4 h bei 45°C gerührt und nach Abkühlung über eine D4-Fritte filtriert. Das Filtrat wurde mit 6,0 ml (47 mmol) Chlortrimethylsilan in 30 min tropfenweise versetzt, wobei eine exotherme Reaktion stattfand. Der Ansatz wurde bei Raumtemperatur noch mehrere Stunden gerührt, im Ölpumpenvakuum eingeengt und der verbliebene Rückstand 15 min bei 20°C/0, 1mbar getrocknet. Der Rückstand wurde anschließend unter Argon mit Pentan extrahiert, der Niederschlag über eine D4-Fritte abfiltriert und das schwachgelbe Filtrat im Ölpumpenvakuum eingeengt. Nach 2-stündigem Trocknen bei 20°C/0,1mbar wurden 11,3 g eines schwach gelblichen Pulvers erhalten. Die Reinheit des isolierten 1,3-Dibenzyl-2-(4-trimethylsilylphenyl)-imidazolidins (s. Gl.), das durch MS-, IR- und NMR-Spektren identifiziert wurde, betrug It. gaschromatographischer Analyse 94,3%, woraus sich eine Gesamtausbeute von 80% ergibt.

In einem Vergleichsversuch ohne Katalysatorzusatz betrug die Grignard-Ausbeute nach 4 h <10%.

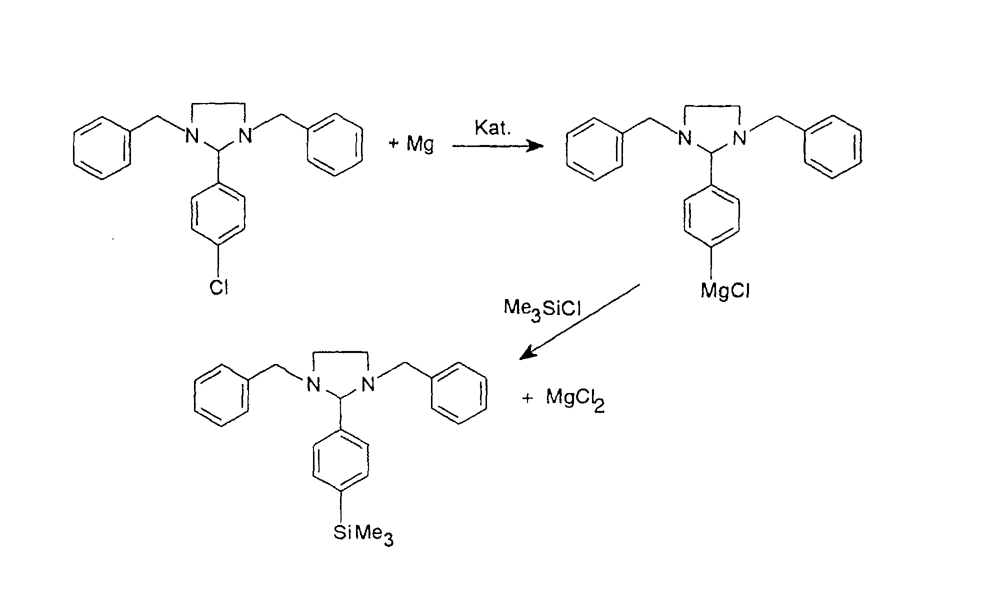

### Beispiel 2

### Katalytische Darstellung von 2-Methyl-phenylmagnesiumchlorid mit Manganphthalocyanin

1,85 g (76 mmol) Magnesium-Pulver wurden mit 10 ml THF und 4 Tropfen Ethylbromid versetzt und der Ansatz 1 h bei Raumtemperatur gerührt. Anschließend wurden 560 mg (0,99 mmol) Manganphthalocyanin (siehe unten) hinzugesetzt und 40 min bei Raumtemperatur gerührt, wobei der Ansatz eine tiefdunkelviolette Farbe annahm. Der Ansatz wurde mit ca. 20 ml THF verdünnt und tropfenweise innerhalb 1h mit 5,9 ml (50 mmol) 2-Chlortoluol (über Molsieb) versetzt. Das Reaktionsgemisch erwärmte sich hierbei bis zur Siedetemperatur des Lösungsmittels und wurde noch insgesamt 4h nachgerührt. Die Ausbeute an 2-Methyl-phenylmagnesiumchlorid betrug, entsprechend der acidimetrischen Titration der filtrierten Lösung, 99% (bezüglich 2-Chlortoluol-Einsatz).

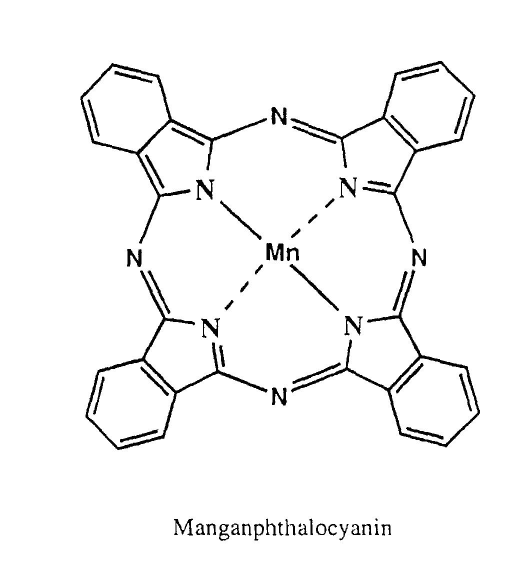

### Beispiele 3 - 7

Die Versuche wurden analog Beispiel 2 durchgeführt, wobei hier verschiedene Eisenkatalysatoren ohne Kokatalysator eingesetzt wurden. Anstelle von Chlortoluol wurden 1-Chlornaphthalin und 2-Chlorpyridin in die entsprechenden Grignard-Verbindungen umgewandelt.

**Tabelle 1**

| Katalysator | Edukt | Reakt.-zeit h | Reakt.-temp. °C | Grignard-Ausbeute % |
|---|---|---|---|---|
| 5, 10, 15, 20-Tetraphenyl-21H, 23H-porphin-Eisen(III)-chlorid-Komplex | 1-Chlornaphthalin | 2 | 20-66 | 95 |
| Eisenphthalocyaninchlorid | 1-Chlornaphthalin | 2 | 20-66 | 87 |
| Eisenphthalocyanin | 1-Chlornaphthalin | 2 | 20-66 | 86 |
| Eisen(II)-ethanolat | 1 -Chlornaphthalin | 4 | 20-55 | 59 |
| Eisen(II)-ethanolat | 2-Chlorpyridin | 0.5 | 20-66 | 98 |

### Beispiel 8

### Katalytische Darstellung von 1-Naphthylphenylmagnesiumchlorid mit Fe(OEt)₂ und MgCl₂

1,85 g (76 mmol) Magnesium-Pulver wurden mit 10 ml THF und 4 Tropfen Ethylbromid versetzt und 1h bei Raumtemperatur gerührt. Anschließend wurden 135 mg (0,92 mmol) Eisen(II)-ethanolat hinzugegeben und 45 min gerührt, wobei die Lösung eine dunkelbraune Farbe annahm Als Cokatalysator wurden nun 6,5 ml (2,5 mmol) einer 0,384 molaren Magnesiumchlorid-Lösung in THF und ca. 10 ml THF zugesetzt und weitere 15 min bei Raumtemperatur gerührt. Nachfolgend wurden 6,8 ml (50 mmol) (-Chlornaphthalin in 1 h zum Reaktionsansatz getropft, wobei die Reaktionstemperatur bis auf 60°C anstieg. Der Ansatz wurde noch 2 h bei Raumtemperatur gerührt und anschließend 2,0 ml der filtrierten Lösung (Vol.= 34 ml) acidimetrisch titriert. Dic Ausbeute an 1-Naphthylmagnesiumchlorid betrug 63% (bezüglich l-Chlornaphthalin-Einsatz). 5,0 ml des Filtrats wurden mit Ethanol protolysiert und die flüchtigen Bestandteile im Hochvakuum (Badtemp. bis 180°C) überdestilliert. Im Destillat wurde gaschromatographisch 0,58 g Naphthalin nachgewiesen (= 61,5% bezogen auf 1-Chlor-naphthalin).

Führt man die soeben beschriebene Umsetzung ohne Katalysator-Zusatz durch, so findet in 10h bei Raumtemperatur keine Reaktion von 1-Chlornaphthalin mit Magnesium-Pulver statt.

### Beispiele 9 - 15

Die Versuche wurden analog Beispiel 8 durchgeführt, wobei hier unterschiedliche Übergangsmetall-Katalysatoren, neben MgCl₂ als Kokatalysator, eingesetzt wurden. Außer l-Chlornaphthalin wurden auch p-Chlortrifluortoluol und Neopentylchlorid in die entsprechenden Grignard-Verbindungen verwandelt.

**Tabelle 2**

| Katalysator | Edukt | Reakt.-zeit h | Reakt.-temp. °C | Grignard-Ausbeute % |
|---|---|---|---|---|
| Eisen(III)-acetylacetonal | 1-Chlornaphthalin | 3 | RT | 12 |
| Titantetra-n-butylat | 1-Chlornaphthalin | 4 | 20-54 | 36 |
| 5,10,15,20-Tetraphenyl-21H, 23H-porphin-Cobalt(II)-Komplex ( siehe unten) | 1-Chlornaphthalin | 0.5 | 20-66 | 69 |
| 5,10,15,20-Tetraphenyl-21H. 23H-porphin-Kupfer(II)-Komplex | 1 -Chlornaphthalin | 4 | 20-66 | 78 |
| 5,10,15,20-Tetraphenyl-21H. 23H-porphin-Zink-Komplex | 1-Chlornaphthalin | 4 | 20-51 | 58 |
| Eisen(II)-ethanolat | p-Chlortrifluortoluol | 6 | 20-39 | 25 |
| Eisen(II)-ethanolat | Neopentylchlorid | 2 | 20-60 | 96 |

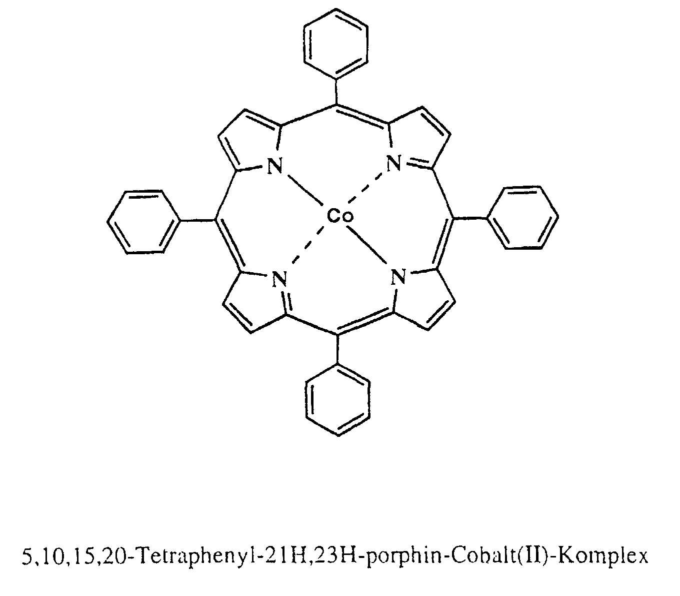

## Patentansprüche

1. Verfahren zur Herstellung von Grignard-Verbindungen, **dadurch gekennzeichnet, daß** organische Halogenide mit Magnesiummetall in einem Lösungsmittel in Gegenwart von Katalysatoren aus Verbindungen der Übergangsmetalle Fe, Mn, Co oder Cu, in denen an das Metall ein oder mehrere Elemente der Gruppen 15 oder 16 des Periodensystems gebunden sind, umgesetzt werden.

2. Verfahren gemäß Anspruch 1, **dadurch gekennzeichnet, daß** zusätzlich ein oder mehrere Kokatalysatoren eingesetzt werden.

3. Verfahren nach Anspruch 2, wobei als Kokatalysatoren Anthracen oder substituierte Anthracene oder deren Mg-Addukte und/oder Magnesiumhalogenide eingesetzt werden.

4. Verfahren nach den Ansprüchen 2-3, wobei MgCl₂ als Kokatalysator eingesetzt wird.

5. Verfahren nach den Ansprüchen 1-4, wobei als organische Halogenide aromatische Chlorverbindungen oder chlorhaltige Heterocyclen verwendet werden.

6. Verfahren nach den Ansprüchen 1-5, wobei als Lösungsmittel etherische Lösungsmittel verwendet werden.

7. Verfahren nach Anspruch 6, wobei als etherische Lösungsmittel Tetrahydrofuran, Monoglyme oder Diglyme verwendet werden.

8. Verfahren nach den Ansprüchen 1-7, wobei als Elemente der Gruppen 15 bzw. 16 N bzw. O verwendet werden.

9. Verfahren nach Anspruch 8, wobei N bzw. O in Form von Amiden oder Phthalocyaninen bzw in Form von Alkoxy- oder Aryloxygruppen an das Metall gebunden sind.

10. Verfahren nach den Ansprüchen 1- 9, wobei die Umsetzung bei Temperaturen bis zur Siedetemperatur des verwendeten Lösungsmittels durchgeführt wird.

11. Verfahren nach den Ansprüchen 1-10, wobei als Magnesiummetall feinteiliges Magnesiumpulver verwendet wird.

## Claims

1. A process for the preparation of Grignard compounds, **characterized in that** organic halides are reacted with magnesium metal in a solvent in the presence of catalysts consisting of compounds of the transition metals Fe, Mn, Co or Cu in which one or more elements of Periodic Table groups 15 or 16 are bound to the metal.

2. The process according to claim 1, **characterized in that** one or more cocatalysts are additionally employed.

3. The process according to claim 2, wherein anthracene or substituted anthracenes or their Mg adducts and/or magnesium halides are used as said cocatalysts.

4. The process according to claims 2-3, wherein MgCl₂ is used as a cocatalyst.

5. The process according to claims 1-4, wherein aromatic chloro compounds or chlorine-containing heterocycles are used as organic halides.

6. The process according to claims 1-5, wherein ethereal solvents are used as the solvent.

7. The process according to claim 6, wherein tetrahydrofuran, monoglyme or diglyme are used as ethereal solvents.

8. The process according to claims 1-7, wherein N or 0 are used as elements of groups 15 or 16.

9. The process according to claim 8, wherein N or O are bound to the metal in the form of amides or phthalocyanines or in the form of alkoxy or aryloxy groups.

10. The process according to claims 1-9, wherein the reaction is performed at temperatures of up to the boiling temperature of the solvent employed.

11. The process according to claims 1-10, wherein finely divided magnesium powder is used as the magnesium metal.

## Revendications

1. Procédé pour la production de réactifs de Grignard, **caractérisé en ce que** des halogénures organiques sont transformés avec du métal de magnésium dans un solvant en présence de catalyseurs à partir de composés des métaux transitoires Fe, Mn, Co ou Cu, dans lesquels un ou plusieurs éléments des groupes 15 ou 16 du système périodique sont fixés sur le métal.

2. Procédé selon la revendication 1, **caractérisé en ce que** un ou plusieurs co-catalyseurs est (sont) utilisé(s) en supplément.

3. Procédé selon la revendication 2, avec lequel de l'anthracène ou des anthracènes substitués ou leurs produits d'addition de Mg et/ou halogénures de magnésium sont utilisés comme co-catalyseurs.

4. Procédé selon les revendications 2-3, avec lequel du MgCl₂ est utilisé comme co-catalyseur.

5. Procédé selon les revendications 1 à 4, avec lequel des composés de chlore aromatiques ou des hétérocycles chlorés sont utilisés comme halogénures organiques.

6. Procédé selon les revendications 1 à 5, avec lequel des solvants volatils sont utilisés comme solvants.

7. Procédé selon la revendication 6, avec lequel du tétrahydrofurane, des monoglymes ou des diglymes sont utilisés comme solvants volatiles.

8. Procédé selon les revendications 1 à 7, avec lequel N et O sont utilisés comme éléments des groupes 15 et 16.

9. Procédé selon la revendication 8, avec lequel N et O sont fixés sous la forme d'amides ou de phthalocyanines ou sous la forme de groupes alcoxy ou aryloxy ou métal.

10. Procédé selon les revendications 1 à 9, avec lequel la transformation est effectuée à des températures allant jusqu'à la température d'ébullition du solvant utilisé.

11. Procédé selon les revendications 1 à 10, avec lequel de la poudre de magnésium fine est utilisée comme métal de magnésium.
